# EUROPEAN PATENT APPLICATION

(11) **EP 4 843 379 A1**
(43) Date of publication of application: **25.11.2026**
(21) Application number: 26180072.6
(22) Date of filing: 20.05.2026
(51) Int. Cl.: A01G 9/029, A01G 24/20, A01G 24/22, A01G 24/44

(54) **SEEDLING DEVICE FOR ENHANCED PLANT GROWTH**

(30) Priority: 21.05.2025 IN 202521049112
(71) Applicant: Rare Agriculture Wealth Private Limited, Raipur, Chhattisgarh 492001 (IN)
(72) Inventor: JAIN, Ankush, 492001 Raipur (IN)
(74) Representative: Curell Suñol S.L.P.

(57) **Abstract**

The present invention relates to a seedling device (100) for enhancing plant growth. In particular, the invention focusses on the development of an eco-friendly seedling device (100) having a biodegradable container (103) that is composed of organic nutrient rich and sustainable materials and a reusable tray (102). Additionally, the present invention reduces pollution and waste by using a biodegradable container that decomposes naturally, enriching the soil with carbon content, beneficial microorganisms and organic matter.

## Description

### FIELD OF THE INVENTION

The present invention relates to the field of sustainable agriculture and horticulture. Particularly, the present invention provides a nursery seedling device (100) for enhancing plant growth. In particular, the invention focusses on the development of an eco-friendly seedling device (100) having a biodegradable container (103) that is composed of organic nutrient rich and sustainable materials and a reusable tray (102). Additionally, the present invention reduces pollution and waste by using a biodegradable container that decomposes naturally, enriching the soil with carbon content, beneficial microorganisms and organic matter.

### BACKGROUND OF THE INVENTION

In horticulture and agriculture the plants prepared in nursery in the seedling tray are better than plants prepared in the field. however, there is an increase in demand for hybrid plant varieties which costs much more than the open pollinated varieties for many progressive farmers and agriculture entrepreneurs.

Traditional seed germination trays predominantly made from non-biodegradable plastics is the most common widely used one time use trays known all over the world. These black color plastic trays often fail to provide ideal growing conditions due to poor aeration, uneven water distribution issues and potential leaching of harmful chemicals. These deficiencies can lead to reduced germination rates, reduced vigor, stunted plant growth and the increased risk of plant stress and mortality. A reliance on synthetic fertilisers and pesticides is also creating environmental issues like global warming and health concerns.

Even though some biodegradable alternatives exists, they often lack necessary mechanical properties,water retention capabilities or cost affectiveness for widespread commercial adoptions. The root disturbance during transplant shock, pest and disease risk, lack of sustainable practise, nutrient retention. For good quality seedlings, it is essential to suggest an effective model for better seeding growth and performance of horticulture crops specially (vegetables and flower). Some of the prior art discussing the use of seedling trays have been listed below
IN202311080913 illustrates biodegradable seedling tray for improved plant health. These trays are economic, easy to use and are commercially viable.

IN202411063612 illustrates an innovative biodegradable seedling tray designed to enhance seedling growth while addressing environmental sustainability. This seedling tray is constructed from a blend of ecofriendly materials, including 5 kg of coconut coir, 1.5 kg of recycled paper, and 500 g of bioplastics, providing both structural support and gradual biodegradability. The tray's growing medium is enriched with 2 kg of organic compost, 1 kg of vermicompost, and 2 liters of compost tea, creating a nutrient-rich environment that promotes robust seedling development. Additionally, 2 kg of peat moss is included to optimize moisture retention and aeration. To further support seedling health, the tray incorporates natural growth enhancers such as 0.5 ml of ethylene, 1-2 g of fuberidazole for fungal protection, and 500 ml of seaweed extract, which provides essential micronutrients and growth promoting compounds. Wheat and pumpkin leaves (1 kg) are used as mulch, while neem bark (100 g) aids in pest control. Plant components include 5 seedlings of ferns and 5 seedlings of aloe vera, along with 10 ml of auxin to stimulate root growth.

IN202311050117 illustrates a novel seed tray design using citrus residue as a sustainable alternative to plastic trays for growing horticultural crop seedlings. The citrus residue, derived from by-products of the citrus industry, is rich in nutrients and bioactive compounds. The seed tray design consists of cone-shaped compartments, each with specific dimensions to support the development of young seedlings' root systems.

Even though recent advancements have introduced biodegradable seedling trays as a solution to the environmental problems associated with traditional plastic trays but still there is a need for improved formulations that integrate diverse organic materials with sustainable alternatives which has all nutrients required by nursery plant stage, enhancing both the environment and agricultural benefits. However, the challenge remains in finding optimal combinations and formulations that balance biodegradability with structural integrity and nutrient availability. further, the available prior art solutions in the current market are not economical, accurate, time efficient and user-friendly for commercial acceptability for farmers and nurseries.

### OBJECTIVES OF THE INVENTION

It is an objective of the present invention to provide a seedling device (100) for enhanced plant growth.

It is another objective of the present invention to provide a seedling device (100) comprising a reusable tray (101) and a biodegradable container (103).

It is another objective of the present invention to provide a seedling device (100) comprising a reusable tray (101) and a biodegradable container (103) in the shape of a cup or a pot.

It is another objective of the present invention to provide a seedling device (100) with better aeration and nutrient utilization.

It is another objective of the present invention to provide a seedling device (100) that provides efficient distribution and utilization of applied organic nutrients.

### SUMMARY OF THE INVENTION

The present invention relates to a seedling device (100) for enhanced plant growth, the seedling device comprising:
a reusable tray (101), having plurality of holes (102); and
a biodegradable container (103), placed in the plurality of holes (102).

The reusable tray (101) is designed to provide a symmetrical arrangement of holes (102) for providing aeration and nutrients to the roots of each biodegradable container (103).

The biodegradable container (103) has the shape selected from a cup or a pot.

The biodegradable container (103) comprises:
a mixture of vermi compost in a range of 8 to 12%;
decomposed cow dung in a range of 13 to 17%;
decomposed eatable kitchen waste in a range of 13 to 17%;
rock phosphate in a range of 3 to 7%;
vermiculite in a range of 3 to 7% ,
panch gavya liquid in a range of 3 to 7%;
neem khali in a range of 8 to 12%;
turmeric in a range of 3 to 7%;
indian black soil in a range of 8 to 12%;
rock salt in a range of 3 to 7% ;
sarson khali in a range of 3 to 7% ;
maida lakdi powder in a range of 3 to 7%; and
guar gum in a range of 3 to 7 %.

The reusable tray (101) is made of a virgin material like high density polyethylene.

The reusable tray (101) has dimensions as length in a range of 450 to 500 mm, breath in a range of 290 to 325 mm and height in a range of 40 to 200 mm.

The biodegradable container (103) has dimensions as diameter in a range 30 to 70 mm and height in a range of 40 to 200 mm.

The seedling device (100) has a weight in a range of 2.5 to 3.5 kg, wherein the reusable tray (101) has a weight in a range of 80 to 140 gm, wherein the biodegradable container (103) has a weight in a range of 35 to 45 gm.

The plurality of holes (102) is in an even number selected from the range of 50 to 70.

### BRIEF DESCRIPTION OF THE DRAWINGS

The present subject matter is described in detail with reference to the accompanying drawings.

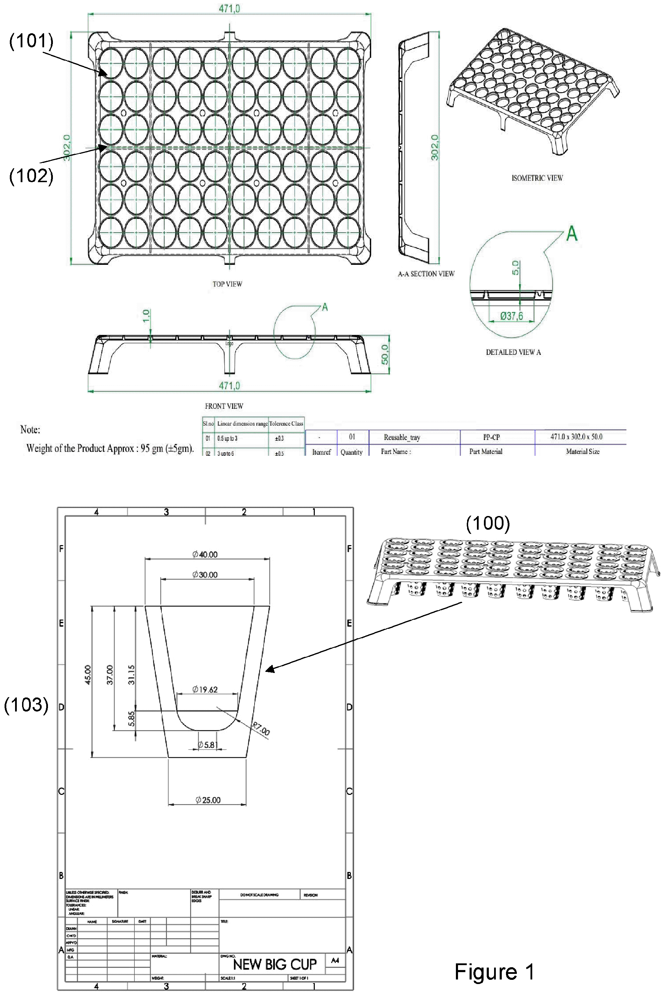

Figure 1 illustrates a diagrammatic representation of a seedling device (100) having a reusable tray (101) and a biodegradable container (103).

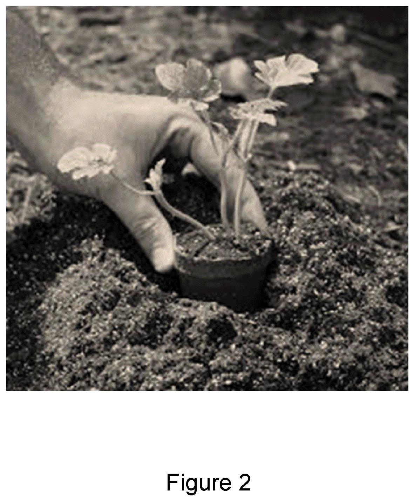

Figure 2 illustrates the transplantation of a plant grown in the seedling device (100) of the present invention.

### DETAILED DESCRIPTION OF THE INVENTION

For convenience, before further description of the present disclosure, certain terms employed in the specification, and examples are delineated here. These definitions should be read in light of the remainder of the disclosure and understood as by a person of skill in the art.

The terms used herein have the meanings recognized and known to those of skill in the art, however, for convenience and completeness, particular terms and their meanings are set forth below. The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". The term "at least one" is used to mean one or more and thus includes individual components as well as mixtures/combinations. Throughout this specification, unless the context requires otherwise the word "comprise", and variations such as "comprises" and "comprising", will be understood to imply the inclusion of a stated element or step or group of element or steps but not the exclusion of any other element or step or group of element or steps. The term "including" is used to mean "including but not limited to". "including" and "including but not limited to" are used interchangeably.

Unless defined otherwise, all technical and scientific terms used herein have the same meaning as commonly understood by one of ordinary skill in the art to which this disclosure belongs. Although any methods and materials similar or equivalent to those described herein can be used in the practice or testing of the disclosure, the preferred methods and materials are now described.

The present disclosure is not to be limited in scope by the specific embodiments described herein, which are intended for the purposes of exemplification only. Functionally equivalent products, compositions, and methods are clearly within the scope of the disclosure, as described herein.

The present invention addresses the limitations of the prior art and some additional practical issues by offering a sustainable, organic and eco-friendly alternatives with low overall costs while producing large scale seedlings commercially while providing superior germination, good aeration, improved natural and tap root development, enhance stability in plant with high immune, good durability of tray for multiple time use, easy handling and management by labours, finishing transplant shock and plant stress issues, minimising environmental impact, good soil conditioning by increasing soil carbon percentage, finishing basel dose requirement, fulfilling nutrient requirement of each plant organically, solving root tangling issues of current available plastic trays, minimised nursery time for transplanting, weed issues in land due to cow dung, use of pesticide and insecticide in nursery, increased productivity of crop with better quality of produce, help completing life cycle of the plant.

The seedling device of the present invention having nutrient rich container can produce 60 seed/plants in one tray and then container (cup/pot) can directly be transplanted in soil with container itself without disturbing the roots and transplant shock issues with ease of holding and managing. Each container has sufficient quantity of nutrients required by each plant in nursery starting stage which helps them to grow naturally and fast without root tangling issues. The seedling device is designed in such a way that each container gets good aeration which helps develop good roots with low use of chemical fertilisers spray.

In an aspect, the present invention provides a seedling device (100) for enhanced plant growth, the seedling device comprising:
a reusable tray (101), having plurality of holes (102); and
a biodegradable container (103), placed in the plurality of holes (102).

In an embodiment of the present invention, the reusable tray (101) is designed to provide a symmetrical arrangement of holes (102) for providing aeration and nutrients to the roots.

In an embodiment of the present invention, the biodegradable container (103) has the shape selected from a cup or a pot.

In an embodiment of the present invention, the biodegradable container (103) comprises:
a mixture of vermi compost in a range of 8 to 12% of the total weight;
decomposed cow dung in a range of 13 to 17% of the total weight;
decomposed eatable kitchen waste in a range of 13 to 17% of the total weight;
rock phosphate in a range of 3 to 7% of the total weight;
vermiculite in a range of 3 to 7% of the total weight;
panch gavya liquid in a range of 3 to 7% of the total weight;
neem khali in a range of 8 to 12% of the total weight;
turmeric in a range of 3 to 7% of the total weight;
indian black soil in a range of 8 to 12% of the total weight;
rock salt in a range of 3 to 7% of the total weight;
sarson khali in a range of 3 to 7% of the total weight;
maida lakdi powder in a range of 3 to 7% of the total weight; and
guar gum in a range of 3 to 7 % of the total weight.

In another embodiment of the present invention, the biodegradable container (103) comprises:
a mixture of vermi compost at 10% of the total weight;
decomposed cow dung at 15% of the total weight;
decomposed eatable kitchen waste 15% of the total weight;
rock phosphate at 5% of the total weight;
vermiculite at 5% of the total weight;
panch gavya liquid at 5% of the total weight;
neem khali at 10% of the total weight;
turmeric at 5% of the total weight;
indian black soil at 10% of the total weight;
rock salt at 5% of the total weight;
sarson khali at 5% of the total weight;
maida lakdi powder at 5% of the total weight; and
guar gum at 5% of the total weight.

In another embodiment of the present invention, the reusable tray (101) is made of a virgin material like high density polyethylene.

In another embodiment of the present invention, the reusable tray (101) has dimensions as length in a range of 450 to 500 mm, breath in a range of 290 to 325 mm and height in a range of 40 to 200 mm.

In another embodiment of the present invention, the biodegradable container (103) has dimensions as diameter in a range 30 to 70 mm and height in a range of 40 to 200 mm.

In another embodiment of the present invention, the seedling device (100) has a weight in a range of 2.5 to 3.5 kg, wherein the reusable tray (101) has a weight in a range of 80 to 140 gm, wherein the biodegradable container (103) has a weight in a range of 35 to 45 gm.

In another embodiment of the present invention, the plurality of holes (102) is in an even number selected from the range of 50 to 70.

In yet another embodiment of the present invention, the plurality of holes (102) is 60.

In an embodiment of the present invention, the seedling device (100) has each biodegradable container (103) of 40 to 45 gm having all organic nutrients required by the plant in it with combination of virgin plastic reusable tray (101) fulfilling all requirement of nursery plants from seed to soil. for eg. 10,000 plants in one acre is the standard ratio of plant transplanted. therefore 10000 cups of 40gm each will give 4 to 4.5 tonnes of organic nutrients to the soil, which is more than the farmers giving chemical fertilizer and organic material in the field as of now.

In an embodiment of the present invention, the seedling device (100) increases the soil enrichment and nutrient uptake by about 50% naturally as compared to the use of conventional seedling tray where plants are grown chemically.

In an embodiment of the present invention, the seedling device (100) after transplant increases plant production by about 20 % and decreases overall production cost by about 30 % as compared to the use of conventional farming method .

In an embodiment of the present invention, the seedling device (100) decreases the pesticide/insecticide usage by 25% and also decreases chemical fertiliser usage by about 20% as compared to the use of conventional seedling tray.

In an embodiment of the present invention, the seedling device (100) makes the plant grow about three times faster after transplant of biodegradable container (103) as compared to the plants grown using conventional seedling tray.

With the use of seedling device (100) there are no root tangling issues in the cups as it is organic and helps the roots to even get out from the container without breaking them by giving them aeration equally at all times.

The seedling device (100) helps with good absorption of water with low evaporation rate ultimately saving millions of litres of fresh water,. also it is easy for laborers to manage water in nursery stage.

The use of seedling device (100) avoids purchasing of basel dose fertilisers for bed preparation before transplanting the plants in the soil as the container of seedling device (100) has all the fertiliser needs till this early stage that too all available organically. It even saves lot of management issues and labor costs for the same.

No need to purchase raw cow dung and decomposing it in the farm as the biodegradable container of the seedling device (100) has more than required decomposed cow dung, vermi compost and many other organic products that helps in increasing the carbon percentage in the soil with no weeds thus helping the farmer to decrease its weeding cost every month and hence increasing production and quality .

The biodegradable container of the seedling device (100) can be taken out from the reusable tray (101) holes (102) with plants and can be transplanted directly into the soil without disturbing the living plant hence not giving a transplant shock while transplanting and also not spreading infection to the roots while labour is holding it.

The seedling device (100) increases the soil carbon percentage with good natural nutrients which ultimately increases the production of the produce with good quality and even helps the plant to complete its life-cycle with lower pest attack issues.

In the present invention a seedling device (100) having a good design plastic reusable tray (101) made of virgin material perfect for nursery purpose which can be used till 10 to 15 years has been developed. The biggest advantage is that its colour is red that attracts very less insects.

Using seedling device (100) in the nursery stage of a plant increases the self immune of the plant naturally which ultimately helps the plant fight pests and insects and also increase the production and quality of the produce.

The container (cup/pot) would not break until its transplanted in soil or until its above the ground, even after roots getting out of the container naturally.

The seedling device (100) helps the plant in early maturity in the nursery stage where transplanting of the plant in the soil can be done earlier ultimately the produce will come early which will increase the farmers income as in agriculture time is money.

The seedling device (100) is technically designed and is not changing the nursery process of seed growing so our product can be used by all the nursery people, government nursing, farmers, universities in good quantity.

The seedling device (100) uses raw material as cow dung, vermi compost etc which is majorly available in villages/ rural areas and can help in women empowernment.

The seedling device (100) decreases use of one time use conventional plastics trays helping agriculture industry in large stop the use of it, lower down pollution by not dumping and burning them to empty the dump by farmers in their individual farms.

The seedling device (100) will stop spreading spillage of one time usable plastics in oceans and roads so preventing animals from consuming plastic and dying.

The seedling device (100) is eligible to be developed as a plant growing kit (b2c) in the market where kids can learn how to help nature and decrease global warming effects for future.

The virgin material is selected from PPCP and HDPE.

### EXAMPLES:

The present disclosure is further illustrated by reference to the following examples which are for illustrative purposes only and does not limit the scope of the disclosure in any way. These examples are not intended to be inclusive of all aspects of the subject matter disclosed herein, but rather to illustrate representative features, methods, compositions, and results. These examples are not intended to exclude equivalents and variations of the present disclosure, which are apparent to one skilled in art.

### Example 1: Process for the fabrication of seedling device (100).

### Example 1a: Process for the fabrication of biodegradable container (103).

All the organic raw materials were acquired from local villages and three tier areas. Then all the organic materials were decomposed using a solar dryer and also in a polyhouse. In next step, the decomposed materials were converted to a powder by using a pulveriser machine. In next step, hard substances were separated from the powdered organic material using a sifter machine. In next step, all the powdered organic material ingredients were mixed to obtain a mixture. The mixture was put into a closed tube to prepare punch gavya. Lastly, the punch gavya was put into a cup/pot design making mould machine to obtain the biodegradable container.

### Example 1b: Process for the fabrication of reusable tray (101).

The PPCP injection grade virgin material was injected into an injection moulding machine for manufacturing plastic tray. The reusable tray made of PPCP grade material is highly flexible and unbreakable.

The seedling device (100) is a combination of both reusable tray and biodegradable cup. It has 60 holes and 60 cups are placed in each tray so once the tray and biodegradable cup/pot are made, they are combined together and seeds are put in each cup and regular nursery process is started commercially

### Example 2: Study of the physical and chemical characteristics of the biodegradable container.

The physical and chemical characteristics of the biodegradable container tested by FCO method have been listed in table 1 below.

**Table 1: Test results for biodegradable container**

| **S.No** | **Test Parameter** | **Measurement unit** | **Test method** | **Test Result** |
|---|---|---|---|---|
| **I** | **Physical characteristics** | | | |
| 1. | Moisture | % | By FCO method | 22.83 |
| 2. | Particle size (Passing 425µ sieve) | | By FCO method | 51.39 |
| 3. | Bulk density | g/cc | By FCO method | 1.14 |
| 4. | pH | - | By FCO method | 7.2 |
| 5. | conductivity | ds/m | By FCO method | 0.428 |

| **II** | **Chemical characteristics** | | | |
|---|---|---|---|---|
| 6. | Nitrogen(N) | % | By FCO method | 1.58 |
| 7. | Nitrogen(N) | mg/kg | By FCO method | 15800 |
| 8. | Phosphorous(P) | % | By FCO method | 0.0028 |
| 9. | Phosphorous(P) | mg/kg | By FCO method | 28.34 |
| 10. | Potassium(K) | % | By FCO method | 0.52 |
| 11. | Potassium(K) | mg/kg | By FCO method | 5244.12 |
| 12. | Organic carbon | % | By FCO method | 1.44 |
| 13. | Organic carbon | mg/kg | By FCO method | 14400 |
| 14. | C/N ratio | | By calculation | 1.44:1.58 |

| **III** | **Heavy metals** | | | |
|---|---|---|---|---|
| 15. | Arsenic (As) | mg/kg | By FCO method | 4.66 |
| 16. | Cadmium (Cd) | mg/kg | By FCO method | 6.52 |
| 17. | Chromium (Cr) | mg/kg | By FCO method | 39.14 |
| 18. | Copper (Cu) | mg/kg | By FCO method | 121.08 |
| 19. | Mercury (Hg) | mg/kg | By FCO method | 2.80 |
| 20. | Nickel (Ni) | mg/kg | By FCO method | 22.35 |
| 21. | Lead (Pb) | mg/kg | By FCO method | 46.57 |
| 22. | Zinc (Zn) | mg/kg | By FCO method | 356.71 |
| 23. | Iron (Fe) | % | By FCO method | 2.34 |
| 24. | Iron (Fe) | mg/kg | By FCO method | 23425.54 |
| 25. | Boron (B) | mg/kg | By FCO method | 23.28 |
| 26. | Magnesium (Mg) | mg/kg | By FCO method | 4193.90 |

### Example 3: Comparative features of the convention seedling tray with seedling device of the present invention.

The table 2 below shows the comparative features of the regular seedling tray with seedling device of the present invention.

**Table 1: Comparative features of the conventional seedling tray with seedling device (100) of the present invention.**

| **S.No** | **Regular seedling tray** | **Seedling device of the present invention** |
|---|---|---|
| **1.** | one-time use black plastic tray | virgin material used for making the tray and can be used multiple times |
| **2.** | Black tray absorbs heat and attracts pests/insects | It is of red color, so doesn't absorb heat and doesn't attract pests/insects |
| **3.** | In this tray plant is grown by giving chemicals /hormones for growing | In seedling device each cup is full of organic nutrients required by plants |
| **4.** | In all regular tray there is aeration issue which is required by plant for healthy root development | Seedling device is designed in such a way that each cup gets good aeration for healthy root development |
| **5.** | Root tangling issue in all regular plastic trays as plastic doesn't allow roots to develop in its horizon | In seedling device cups are designed and made in such a way that roots can come out from the cups itself without breaking the cups and can grow without tangling in its horizon |
| **6.** | Plants take longer time to develop and all plants are not equally healthy as nutrients are given through spray where each plant don't get the nutrients and as a result are either weak or die | In seedling device plants develop faster as they have nutrients in its reach and that too organic, so it develops faster and saves time of transplant. Also, each plant gets equal nutrients so plants don't die as each plant gets sufficient nutrients |
| **7.** | More water is required | Less water requirement |
| **8.** | Tough management and technicality in nursery is required and even high plant handling risk involved | Easy management and can be easily handled by labours, even pretransplant is possible as nursery is ready faster |
| **9.** | 5% of the transplants experience shock and even plants die | No transplant shock happens as the biodegradable cups act as shield and doesn't allow plants to get shock and die |
| **10.** | - | Biodegradable cups will break inside soil only if it is transplanted and then decomposes. Outside the soil it doesn't degrade or break (figure 2). |
| **11.** | Plants are developed chemically | Plants are developed organically |
| **12.** | A tomato plant will take around 30 days to develop in regular plastic tray | A tomato plant will take around 20 days to develop in the seedling device |

## Claims

1. A seedling device (100) for enhanced plant growth, the seedling device comprising:
a reusable tray (101), having plurality of holes (102); and
a biodegradable container (103), placed in the plurality of holes (102).

2. The seedling device (100) as claimed in claim 1, wherein the reusable tray (101) is designed to provide a symmetrical arrangement of holes (102) for providing aeration and nutrients to the roots.

3. The seedling device (100) as claimed in claim 1, wherein the biodegradable container (103) has the shape selected from a cup or a pot.

4. The seedling device (100) as claimed in claim 1, wherein the biodegradable container (103) comprises:
a mixture of vermi compost in a range of 8 to 12%;
decomposed cow dung in a range of 13 to 17%;
decomposed eatable kitchen waste in a range of 13 to 17%;
rock phosphate in a range of 3 to 7%;
vermiculite in a range of 3 to 7% ,
panch gavya liquid in a range of 3 to 7%;
neem khali in a range of 8 to 12%;
turmeric in a range of 3 to 7%;
indian black soil in a range of 8 to 12%;
rock salt in a range of 3 to 7%;
sarson khali in a range of 3 to 7%;
maida lakdi powder in a range of 3 to 7%; and
guar gum in a range of 3 to 7 %.

5. The seedling device (100) as claimed in claim 1, wherein the reusable tray (101) is made of a virgin material like high density polyethylene.

6. The seedling device (100) as claimed in claim 1, wherein the reusable tray (101) has dimensions as length in a range of 450 to 500 mm, breath in a range of 290 to 325 mm and height in a range of 40 to 200 mm.

7. The seedling device (100) as claimed in claim 1, wherein the biodegradable container (103) has dimensions as diameter in a range 30 to 70 mm and height in a range of 40 to 200 mm.

8. The seedling device (100) as claimed in claim 1, wherein the seedling device (100) has a weight in a range of 2.5 to 3.5 kg, wherein the reusable tray (101) has a weight in a range of 80 to 140 gm, and wherein the biodegradable container (103) has a weight in a range of 35 to 45 gm.

9. The seedling device (100) as claimed in claim 1, wherein the plurality of holes (102) is in an even number selected from the range of 50 to 70.
